# EUROPEAN PATENT APPLICATION

(11) **EP 4 088 892 A1**
(43) Date of publication of application: **16.11.2022**
(21) Application number: 22169962.2
(22) Date of filing: 26.04.2022
(51) Int. Cl.: B25J 11/00

(54) **SYSTEM AND METHOD FOR DRESSING A ROBOT**

(30) Priority: 11.05.2021 BE 202105380
(71) Applicant: Deduco International, 8500 Kortrijk (BE)
(72) Inventor: Dujardin, Tom, 8500 Kortrijk (BE)
(74) Representative: IP HILLS NV

(57) **Abstract**

A system for decorating a robot (100), comprising:
- a robot (100), comprising a torso (102) and a head (101) attached to the upper side of said torso (102), said robot (100) extending along a height direction (205);
- a cover, comprising a plate (800) from bendable material;
- a first (900, 600) and a second connecting system (904, 105) adapted to detachably attach the plate (800) to the robot (100) at a first (201) respectively second height position (202), so that, in connected state, a first (900) and second plate section (903), at opposite ends of the plate (800), are at fixed positions with respect to the robot (100), and at least a part of said plate (800) adopts a bent shape (1300) therebetween.

## Description

### Technical Area

The present invention in general relates to decorating a social robot. In particular, the invention provides a solution allowing to provide a social robot with an exchangeable decoration in a simple and cheap manner, wherein the decoration moreover does not detract from the human appearance of the robot.

### Background of the invention

Generally, a robot is a machine which can be programmed to perform certain tasks or actions autonomously. In a subgroup of applications, typically in which there is a certain interaction with the human, the robot is given a human appearance: the robot then has a head and a torso, and optionally limbs. Often the robot also comprises one or more displays, for example to share information or to allow interaction with the user. Such 'social' robots or 'humanoids' are for example utilized to guide customers in a shopping environment or to assist a patient in care tasks. Known examples are robots James, Pepper or Nao, as presented at https://zorarobotics.be/robots.

In order to promote human interaction, it is important that a social robot has an appealing appearance. Typically the body of the robot is made from plastic, wherein optionally clothing is represented on the body by means of colours. Clothing 'drawn' on the body is unchangeable, so that usually a neutral appearance is chosen. It is therefore not possible to change the appearance of the robot according to a certain theme, for example Christmas or Halloween, or as a function of a certain promotional action or task of the robot.

In known solutions the appearance of the robot can only be changed through a display. The robot's head is for example provided with a display on which a variable facial expression can be shown. However, it is hard to realize the representation of clothing on the robot body by means of a display, since flat representation on a display do not look realistic. Additionally, too many displays result in a technological character of the robot, in which the human appearance of the robot is lost. Moreover, additional displays increase the cost of the robot.

It is an object of the present invention to describe a system which overcomes one or more of the described disadvantages of prior art solutions. More specifically, it is an object of the present invention to describe a system allowing to provide a social robot with an exchangeable decoration in a simple and cheap manner, wherein moreover the decoration does not detract from the human appearance of the robot.

### Summary of the Invention

According to the present invention, the above identified objectives are realized by a system for decorating a robot, comprising:
- a robot, comprising a torso and a head attached to the upper side of the torso, the robot extending along a height direction;
- a cover, comprising a plate from bendable material;
- a first and a second connector pair adapted to detachably connect the plate to the robot at a first respectively second height position, so that, in connected state, a first and second plate section, at opposite ends of the plate, are at fixed positions with respect to the robot, and at least a part of the plate adopts a bent shape therebetween,
the first and second connector pair each comprising:
- one or multiple recesses disposed in the material of the plate, and one or multiple projections comprised in the robot, the one or multiple projections being adapted to be slid through the one or multiple recesses, or
- one or multiple edges of the plate, and one or multiple recesses comprised in the robot, the one or multiple edges being adapted to be slid into the one or multiple recesses.

In other words, the invention relates to a robot which comprises at least a torso and a head. It herein relates to a social robot or 'humanoid', wherein the robot is given a human appearance. A human appearance refers herein to the presentation of a certain character by the robot, a figure with which a human will interact, not necessarily a representation which is exactly similar to the human body. The robot has a head, typically a round shape at the upper side of the body. The head is connected to a torso, optionally by a neck therebetween. In an embodiment the robot's body consists solely of a head and a torso, which is sufficient to achieve the appearance of a human character. In another embodiment the body additionally has limbs, for example arms and/or legs attached to the torso. The torso may have a round shape at the level of the belly or chest, or may be completely flat at the front side. Typically, the body of the robot is made from plastic. The robot may be intended to be positioned in a fixed place, or may be capable of moving itself, for example by driving or walking around.

The robot extends along a height direction, i.e. the robot is typically elongated along this direction. As seen from the height direction, from bottom to top, there is first the bottom side of the torso, then the upper side of the torso, and then the head. Typically, the robot is adapted to be placed upright, with the head as upper part. If the robot is placed in upright state on a ground plane, then the height direction is the vertical direction, or in other words the direction perpendicular to the ground plane. A horizontal plane is a plane parallel to this ground plane. A height position refers to a location or zone on the robot situated at a certain height; for example, the head is situated at a higher height position than the torso. In the upright state of the robot, the height position thus refers to a certain distance to the ground plane on which the robot stands.

The system furthermore comprises a cover, which comprises a plate from bendable material. The cover is an individual element of the system, which can be separate from the robot, and can be attached thereto. A plate refers to an element extending in a flat plane along a length direction and width direction. The shape of this flat plane may vary among different embodiments. The thickness, measured perpendicular to this plane, is small compared to the length or width, and is typically constant across the entire surface of the plate. The plate has a certain rigidity, in contrast to for example a cloth or film. A bendable material refers to a material which has a certain rigidity, but which can be bent when applying a certain force. Elastic deformation will then occur; after removing the force, the plate returns to its flat state without lasting deformation. In another embodiment the plate is a sheet of cardboard or thick paper. In another possible embodiment, the plate is made from plastic, wood, for example a bending plate, bending triplex or bending multiplex, metal, for example aluminium, etc. Combinations of different bendable materials within the plate are also possible. Apart from an elastic deformation, the plate material may also undergo a plastic deformation. The plate may for example be folded or creased, which leaves a permanent deformation along a fold or crease line.

The system comprises a first and a second connector pair, which act as a first and second connecting system respectively. By means of these connecting systems, the plate may be detachably connected to the robot at respectively a first and second height position. The plate can thus be attached to the robot and easily be detached therefrom; no permanent connection is formed between the cover and the robot. A first height position and a second height position refers to two different height positions. In upright state of the robot the first height position is for example located higher than the second height position. In an embodiment, the first height position refers to a zone or location on the robot situated at the upper side of the torso, closer to the head, and the second height position to a zone or location situated at the bottom side of the torso, further away from the head. In this case the plate is thus detachably connected to the robot at the level of the upper side of the torso, and at the level of the bottom side of the torso. In other words, the first and second height position refer to different locations or zones on the robot, which are separated according to the height direction. These locations or zones can occupy a certain width and depth. The plate is thus detachably connected to the robot, at a higher position and at a lower position.

Connecting the plate to the robot is such that in connected state a first and second plate section, at opposite ends of the plate, are at fixed positions with respect to the robot. A plate section refers to a plate edge, or a certain part of the plate surface. The first and second plate section are each situated at opposite ends of the plate. Seen along the length direction of the plate, the plate has two ends, each located at a different length position. The first or second plate section may be a plate edge, or thus one of the two outer sides of the plate. In another embodiment, the first or second plate section can be a zone on the plate, located at the side of or near one of the two outer plate ends. In other words, the first and second plate section are clearly separated from each other along the length direction, with the first plate section situated closer to the one outer end, and the second plate section closer to the other outer end of the plate. Thus, along its length the plate is connected to the robot at two different opposite positions.

On the basis of detachable connections, the first and second plate section are at fixed positions with respect to the robot. This means that at the level of each of the plate ends, the plate can no longer assume a free position; in other words, the number of degrees of freedom is limited by fixing the positions of the two plate sections.

The plate adopts a bent shape between the two plate sections which are at fixed positions, at least over a part thereof. This means that at the level of the plate sections a degree of freedom is removed, but that the plate can adopt a free form between the both plate ends; the elastic bending of the plate arises automatically by fixing the plate sections. In other words, the plate is tensioned between two points, and bulges therebetween. The bent shape arises from a suitable dimensioning of the plate, robot and connecting systems; the plate is for example sufficiently long in the length direction compared to the distance between the two height positions where the detachable connection occurs. After attaching the plate to the robot, the bent shape of the shape can remain fixed, or optionally the bent part can wiggle somewhat freely with respect to the robot body.

The bent shape refers to the presence of a bend or curve in the plate. The bend of an object is the degree to which it deforms, after applying a force perpendicular to a long axis of the object, in the direction perpendicular to that long axis. This change of shape is continuous, in contrast to a dent, fold or crease in which a sharp or discontinuous change in shape occurs. In case of the robot cover of the invention, the long axis of the plate is along the length direction of the plate. In other words, when seen along the length direction, the plate is fixed at two opposite ends, and the deformation occurs in a direction perpendicular to the length direction. Thus, after mounting on the robot, the plate is not flat over the length direction of the plate but it is convex; a convex state which is obtained also by bringing the two opposite ends towards each other from a flat state of the plate. Thus, in mounted state, a line running from bottom to top over the plate, is bent. In contrast, according to the width direction of the plate, there is no curve present in mounted state: a line running from left to right over the plate is straight.

In an embodiment it is possible that after fixing the two plate sections at opposite ends, the plate adopts a bent shape over only part of its length. For example, the plate is folded or creased along a fold or crease line, at a location between the two plate ends. This can result in a part of the plate not being bent but being straight in connected state.

The first and second connector pair each consist of an element comprised in the cover and a corresponding element comprised in the robot. This means that a connecting system consists of a pair of elements, of which one element is present on the plate and one element is present on the robot. Both elements correspond, meaning that their shapes and positions are matched for together forming a detachable connection.

The first and second connector pair comprise:
- one or multiple recesses disposed in the material of the plate, and one or multiple projections comprised in the robot, the one or multiple projections being adapted to be slid through the one or multiple recesses, or
   - one or multiple edges of the plate, and one or multiple recesses comprised in the robot, the one or multiple edges being adapted to be slid into the one or multiple recesses.

This means that a connector pair is formed by a recess and a corresponding projection. The projection can herein be located in the plate and the projection on the robot, or vice versa. In an embodiment the second connector pair comprises one or multiple recesses in the plate material and one or multiple projections or the robot, and the first connector pair comprises one or multiple edges of the plate and one or multiple recesses in the robot. In another embodiment the first connector pair comprises one or multiple recesses in the plate material and one or multiple projections on the robot, and the second connector pair comprises one or multiple edges of the plate and one or multiple recesses in the robot. In yet another embodiment both the first and the second connector pair comprise one or multiple recesses in the plate material and one or multiple projections on the robot. In yet another embodiment both the first and the second connector pair comprise one or multiple edges of the plate and one or multiple recesses in the robot. In each of the embodiments recesses in the plate material and projections on the robot match each other, i.e. they are such that a projection of the robot can be slid through a corresponding recess in the plate material. Analogously recesses in the robot and edges on the plate match each other, i.e. they are such that the relevant plate edge can be slid into a recess on the robot.

A recess in the material of the plate is for example a groove, a cut, a hole or a slit disposed in the plate material. A projection on the robot is for example a pin, an edge, an end or a hook on the robot, which extends from a surface of the body of the robot. In an embodiment one or both detachable connections are formed by holes in the plate which fit over the pins on the robot. In forming the connection, a hole in the plate is slid over a corresponding pin on the robot. The plate section is then at a fixed position with respect to the robot because the edge of the hole in the plate contacts the pin on the robot.

A recess in the robot is for example a groove, cut, hole or slit disposed in the body of the robot. A edge of the plate is for example the edge of a plate end, located at the outer circumference of the plate, or is the edge of a centrally located plate section or flap. In an embodiment one or both detachable connections are formed by a plate edge sliding in a groove of the robot. The plate section is then at a fixed position with respect to the robot because the plate edge slides into the groove and contacts the robot body therein.

Within a connector pair, the element comprised in the cover is part of the plate from bendable material. This means that a connector pair consists of a pair of elements, wherein the element on the cover is part of the plate itself. Indeed, the connecting element on the plate is either an edge of the plate or a recess in the plate. Thus, no additional elements are attached on the plate to be able to form the connection to the robot.

The invention provides several advantages. Firstly, the cover in the form of a plate can be manufactured simply and cheaply. It suffices to provide a flat plate from a bendable material, which can be easily cut in the desired shape. No special or expensive materials are required, a cardboard plate for example may already suffice. The plate may also be printed on easily in the flat state, to present a specific theme or type of clothing on the cover.

In addition, although the cover can be manufactured as a flat plate, it is nevertheless possible to obtain a natural appearance after mounting on the robot. It suffices herein to tension the plate between a high and a low position on the robot, and to allow the it to adopt a bent shape therebetween. The curve of the bent shape reproduces for example the shape of a round belly or chest in a vest, shirt or suspenders. The bent shape causes herein as it were a 3D effect, which renders the appearance of the covered robot human and playful, in contrast to the unnatural design which would be obtained by flat or angular shapes. This 3D effect is obtained without the need of a complex design of the cover: no assembly of separate parts of clothing are is required, there is no need of elastic fabrics or of complex patterns, etc. Thus, the natural curve in the cover contributes to the human appearance of the social robot, and avoids that the robot has a overly technological appearance, or looks like a walking billboard.

Furthermore, no additional components or individual elements are required to detachably attach the cover to the robot body. This contributes to a simple and cheap production of the cover, where it suffices to cut a plate to the desired shape, and no additional connecting elements are to be disposed on the plate. This also contributes to an increased user friendliness, where no individual connecting components can get lost. In other words, utilizing a connection of the projection-recess type contributes to a cover which is cheap and simple to produce.

Finally, utilization of a connection of the projection-recess type contributes to allowing cover to be attached to the robot body and removed therefrom in a quick and simple manner. In other words, the cover can be exchanged simply and quickly, through the detachable connections. Thus, the appearance of the robot can be changed very flexibly, simply by applying a different cover to the robot. Consequently, the appearance of the robot body itself can be kept neutral, while the print on the cover varies according to a theme (Christmas, Easter, Halloween, Valentine's day, ...), a current promotional action (colours of a brand, slogan, ...), or the current function of the robot (butler, care function, ...).

Optionally, according to claim 2, the plate is made from one piece from the same material which, in an unconnected state, extends in a flat plane. This means that when the cover is not connected to the robot body, it is possibly to lay the plate in a flat plane. Moreover, the plate consists of one piece, not of several pieces. Therefore it suffices to cut the cover from a flat piece of material and to print on it. This contributes to a simple and cheap production of the cover.

Optionally, according to claim 3, in connected state, the plate is elastically deformed over at least a part thereof, resulting in the bent shape. When the plate is attached to the robot, the bottom plate section and the upper plate section are at fixed positions, while the part therebetween is bent over at least part of the length. The bend is an elastic deformation; a deformation which is adopted by the plate automatically upon attaching and which also disappears after releasing the plate. This contributes to a natural or playful appearance of the cover after attaching, while the curve is not to be applied when producing the cover.

Optionally, according to claim 4, the plate, in connected state, adopts over at least a part thereof a bent shape, with a concave side facing said torso. This means that the plate is convex after attaching, with the convex side facing away from the robot's body and the concave side facing towards the robot's body. In this way the plate adopts a convex shape which represents for example the round shape of a belly or chest in the clothing.

Optionally, according to claim 5, in connected state, at least a part of the torso is covered by the plate across the entire height of the torso. This means that, since the detachable connection occurs at two different height positions, a first height position is situated at the upper side of the torso, or even higher, and the second height position is located at the bottom side of the torso, or even lower. In this way, the cover forms a coat which covers the torso across its entire height. However, parts of the torso may optionally remain uncovered along the width of the robot.

Optionally, according to claim 6, the one or multiple recesses comprised in the robot are one or multiple horizontal grooves, adapted to slidingly receive one or multiple edges of the plate along a direction perpendicular to the height direction. Thus, the one or multiple grooves form a recess extending in a direction parallel to the ground plane. A horizontal groove has as advantage that, in case a part of the plate tears off when removing the cover, the torn part can still be removed. In case of a vertical groove having the opening upwards, a torn piece can fall deeper into the groove so that it is hard to remove. Consequently horizontal grooves allows for a quick removal of the cover, without the need to pay attention to the plate tearing.

Optionally, according to claim 7, and the one or more projections comprised in the robot are vertical pins, extending along a direction parallel to the height direction. The robot for example comprises a ring, positioned below the torso, wherein upwardly pointing pins are located on the ring. The plate can then be slid through the holes in the lower plate section over the pins. In another embodiment the robot has an ring-shaped collar, placed at the upper side of the torso, wherein downwardly pointing pins are located on the ring. Providing the pins has as advantage that the pins are hidden behind the plate after the plate is slid thereover. Thus, the attachment elements are no longer visible in attached state of the cover. This contributes to a human, playful and non-technical appearance of the decorated robot.

Optionally, according to claim 8, the first height position is located higher than the second height position, and the first connector pair comprises:
- one or multiple horizontal grooves comprised in the robot, and
- one or multiple edges of the plate, adapted to be slid into the one or multiple grooves;
and the second connector pair comprises:
- one or multiple holes disposed in the plate, and
- one or multiple vertical pins comprised in the robot, adapted to be slid through the one or multiple holes.

This means that the detachable connection on top is formed by at least one edge of the plate which slides into a groove disposed on the robot's body. At the bottom the detachable connection is formed by vertical pins, for example placed on a ring below the torso, and holes in the lower plate section.

Optionally, according to claim 9, the robot comprises a groove, disposed over the circumference of the neck, wherein the neck is located at a height position between the head and the upper side of the torso, and wherein the plate comprises a round edge, adapted to be slid into said groove. A groove over the circumference of the neck of the robot has as advantage that this does not disrupt the natural appearance of the robot: since the groove nicely joins at the neck and is not prominent, it is not conceived as a technical attachment element.

Moreover, there is contact between the round plate edge and the groove over a certain width and certain depth of the robot. Thus, attaching does not occur at one point but over a line, running around the neck. This causes a strong attachment, in which the plate will not detach from the robot, also not when the robot moves or someone runs into the plate.

Optionally, according to claim 10, the plate comprises one or multiple holes, and the robot comprises one or multiple pins extending along the height direction, the pins being placed at the bottom side of the torso and adapted to be slid through the holes. The robot has for example a horizontal edge or ring below the torso, on top of which upwardly pointing pins are disposed. The use of such vertical pins for attaching at the bottom has as advantage that the pins themselves are hidden behind the cover plate. Moreover, when a piece of the plate tears off when detaching, the torn off piece will still be accessible to be removed. In another embodiment two pins positioned next to each other are disposed on the robot. In that way, there are two distinct attachment points over the width of the robot at the lower height position. This contributes to a stronger attachment, in which the plate will not detach from the from the robot when it moves or when someone runs into the plate.

Optionally, according to claim 11, the plate, in connected state, is folded along one or multiple lines, each of the lines being perpendicular to the height direction. This means that, before attaching it to the robot, the plate is folded along at least one line. This straight line runs parallel to the width direction of the plate, i.e. perpendicular to its length direction. When the plate is attached to the robot, the fold runs perpendicular to the height direction. This means that the plate, when seen along its length direction, is partly bent, i.e. permanently deformed, and contains a fold or crease, i.e. a discontinuous or sharp deformation. The fold or crease leaves a permanent deformation on the plate. In an embodiment one or multiple fold lines or signs are disposed on the plate, which indicate how the plate is to be folded before attaching it to the robot. In another embodiment there are two horizontal folds, each located at a different height position, and both located between the first and second height position at which the detachable connecting occurs. In that way, a piece of the plate can be folded backwards at a high and a low position, and connecting to the robot occurs in the pieces folded backwards. The pieces folded backward can herein remain straight, which ensures easy application of the cover. Since the connection occurs in the pieces which are folded backward, it is also possible to hide the connecting elements. Finally, the folds cause the curved part of the plate not to become overly convex, which would give the clothing an unnatural shape.

Optionally, according to claim 12, the plate is made from cardboard. Cardboard refers to thick paper or to paper consisting of multiple layers, typically with a weight of 180 grams per square meter or more. The use of cardboard for the cover has as advantage that this material is cheap, can easily be cut in the right shape and can easily be printed on. Moreover, it offers sufficient sturdiness, while it can still adopt a bent shape without requiring large force.

Optionally, according to claim 13, the plate has a middle section, which along the length direction of the plate is located between the opposite ends, and wherein the middle section has a width which, along the length direction, first increases and subsequently decreases, the width being measured perpendicular to the length direction. The width is herein measured perpendicular to the length direction of the plate. Thus, the plate is cut into a specific shape to improve the natural appearance of the decoration even more. For example, a piece of the plate covers the torso from bottom to top, and this piece has first an increasing width and then a decreasing width. In other words, a maximum width is achieved at a height position located between the bottom side and the upper side of the torso. In that way, the shape of a belly or chest is reproduced even better in the represented clothing.

Optionally, according to claim 14, at least one side of the plate has been printed on. The print is typically located at the front side of the plate, this is the side facing away from the robot body. Based on a print certain clothing may be represented on the plate, for example a jacket of a suit and tie, or the suspenders of dungarees. Also a slogan, or symbols that match a specific theme or brand, may be printed thereon.

According to a second aspect of the present invention, the above identified objectives are achieved by a method for decorating a robot, defined by claim 15, comprising:
- providing a robot, comprising a torso and a head attached to the upper side of the torso, the robot extending along a height direction;
- providing a cover, comprising a plate from bendable material;
- detachably connecting the plate to the robot at a first and second height position, wherein a first and second plate section, at opposite ends of plate, are at fixed positions with respect to the robot, and at least a part of the plate adopts a bend shape therebetween,
wherein detachably connecting occurs:
- by sliding one or multiple projections comprised in the robot through one or multiple recesses in the material of the plate,
- or by sliding one or multiple edges of the plate into one or multiple recesses comprised in the robot.

### Brief Description of the Drawings

Fig. 1, Fig. 2 and Fig.3 show a robot according to an embodiment of the invention, respectively according to a front view, side view and rear view.
Fig. 4 shows an attachment mechanism on the robot, at the lower side of the torso, for attaching a cover, according to an embodiment of the invention.
Fig. 5 and Fig. 6 show an attachment mechanism on the robot, at the upper side of the torso, for attaching a cover, according to an embodiment of the invention.
Fig. 7, Fig. 8, Fig. 9 and Fig. 10 show a cover, in unconnected state, according to an embodiment of the invention.
Fig. 11, Fig. 12, Fig. 13 and Fig. 14 show a robot with a cover attached thereto, according to an embodiment of the invention.

### Detailed Description of the Embodiments

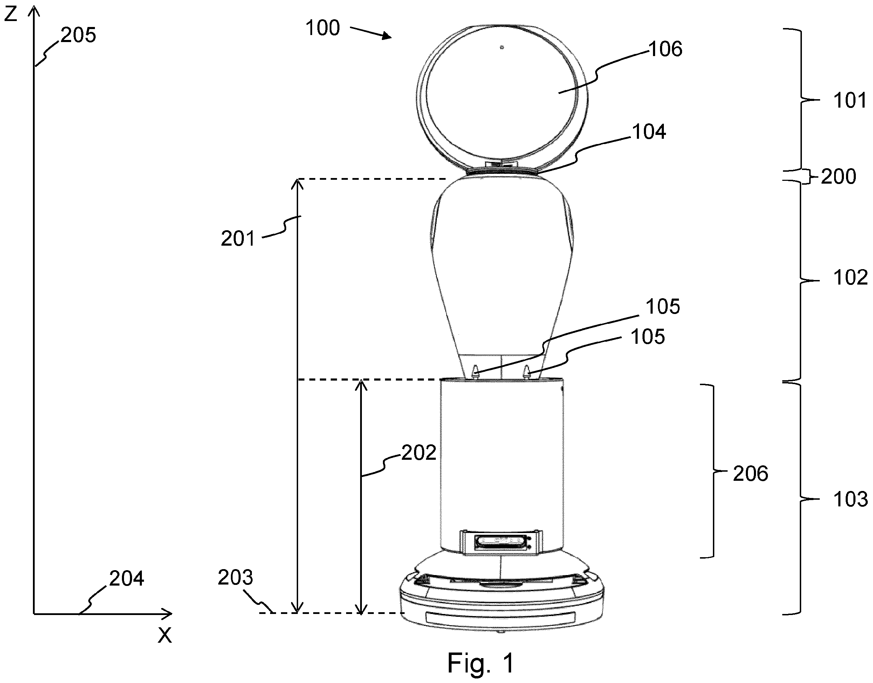

Fig. 1 to Fig. 3 show a robot 100 according to an embodiment of the invention. The figures show the robot 100 in upright state, positioned on a ground plane 203. The robot extends along a height direction 205. In upright state, the height direction 205 corresponds to the vertical direction 205 or Z-direction 205, perpendicular to the ground plane 203. Furthermore, the robot 100 occupies a certain width, along the width direction or X-direction 204, and a certain depth, along the depth direction or Y-direction 301. Along the height direction, the robot 100 comprises successively a base 103, a torso 102 and a head 101. The upper side of the robot 100 refers to the side of the head 101, while the bottom side refers to the side of the base 103.

The head 101 comprises a display 106 on which a facial expression may be displayed. The front side of the robot 100 refers to the side of the screen 106, and the back side refers to the opposite side. The head 101 is connected to the neck 200, which in turn is connected to the upper side of the torso 102. The bottom side of the torso 102 is mounted on the base 103. Wheels are located below the base 103, so that the robot 100 can drive around, for example in a shopping environment. The robot 100 has for example as function to guide customers in a shop, or to scan store racks by means of a camera. Although according to the embodiment shown the robot 100 has only a head 101 and torso 102, without limbs, it represents a human character, with whom the customers of the shop will interact. Thus, the robot 100 is an example of a social robot.

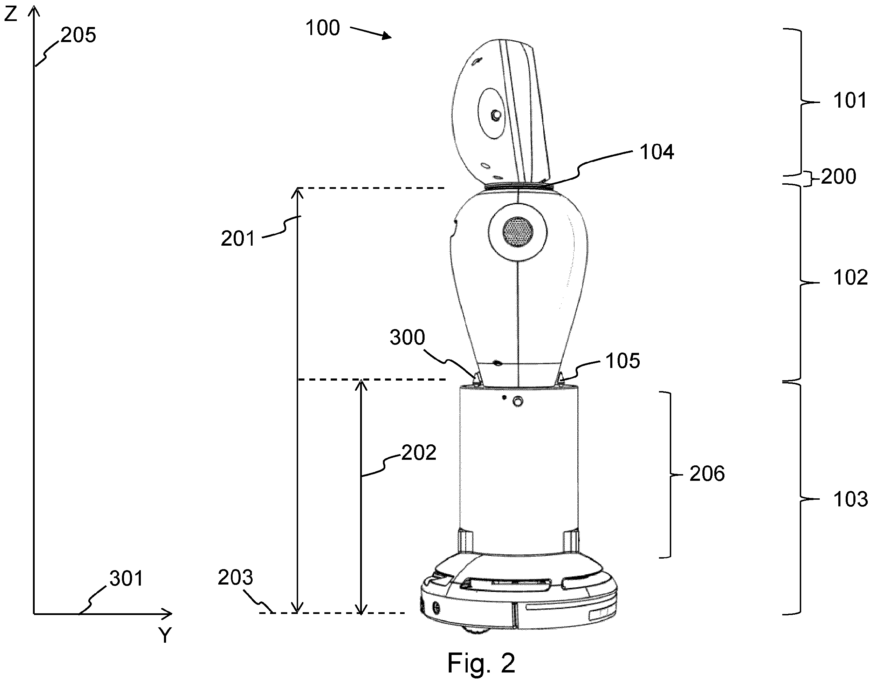

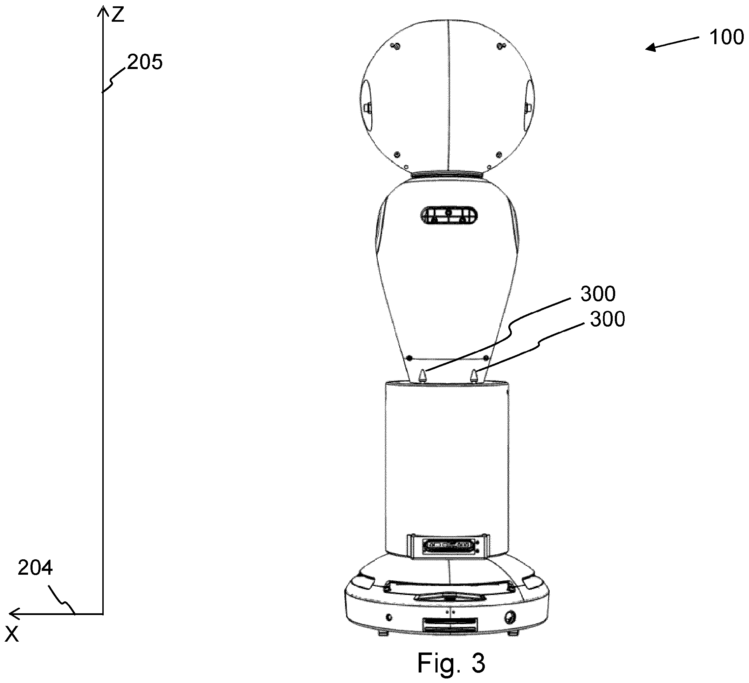

A first height position 201 and a second height position 202 are indicated on Fig. 1 and Fig. 2. The first height position 201 is located at the level of the neck 200, at the upper side of the torso 102. The second height position 202 is located at the level of the bottom side of the torso 102. The two height positions 201, 202 indicate locations at each of which an attachment element is disposed on the robot 100, adapted to detachably connect a cover 800 to the robot 100. The attachment element at the level of the neck 200 is a ring-shaped element 104. The attachment element at the level of the bottom side of the torso 102 consists of two pins 105. Each of the attachment elements 104 and 105 on the robot 100 form a connector pair together with a corresponding element on the cover 800, as will be further explained below. The pins 105 allow a cover 800 to be attached to the front side of the robot 100. Fig. 2 and Fig. 3 show that an analogous set of pins 300 is provided for attaching a cover 800 to the back side of the robot 100.

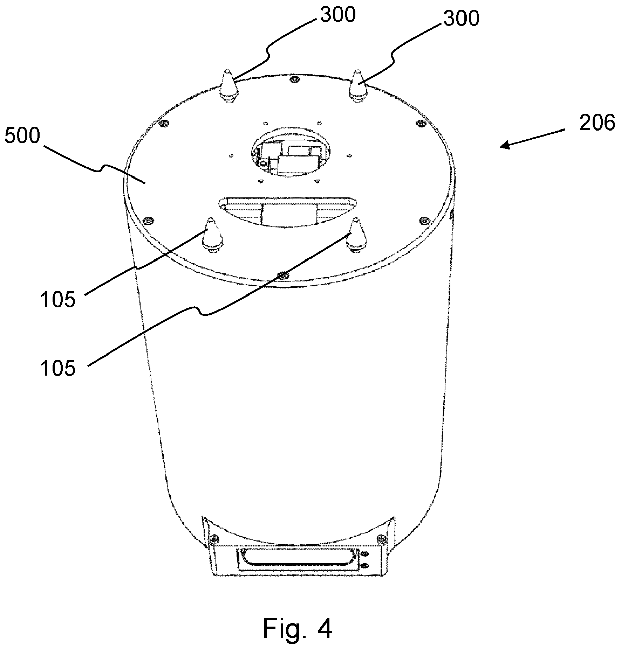

Fig. 4 shows the attachment pins 105 and 300 in more detail. The pins 105 and 300 are located on a cylindrical part 206 which is part of the base 103. The cylindrical part 206 has at its top a round ring or disc 500, on which the pins 105 and 300 are fixedly attached. The pins 105, 300 are elongate and extend along the height direction 205. A set of pins 105 or 300 respectively consists of two vertical pins that are placed next to each other, both at a same depth position.

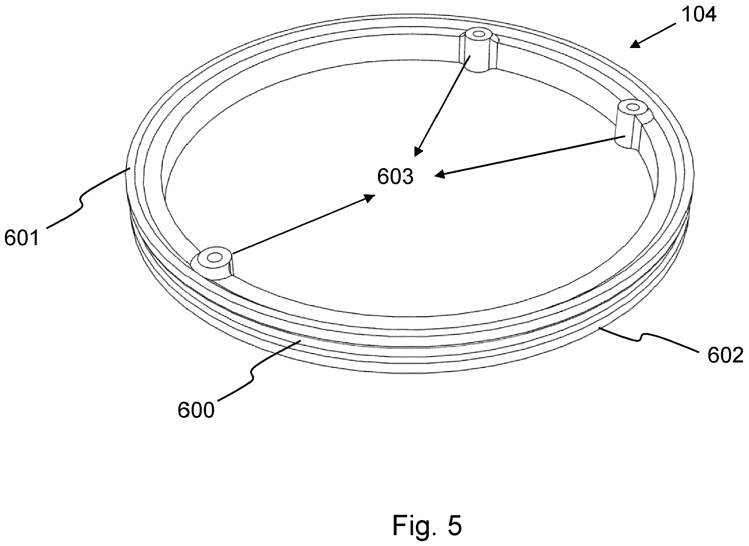

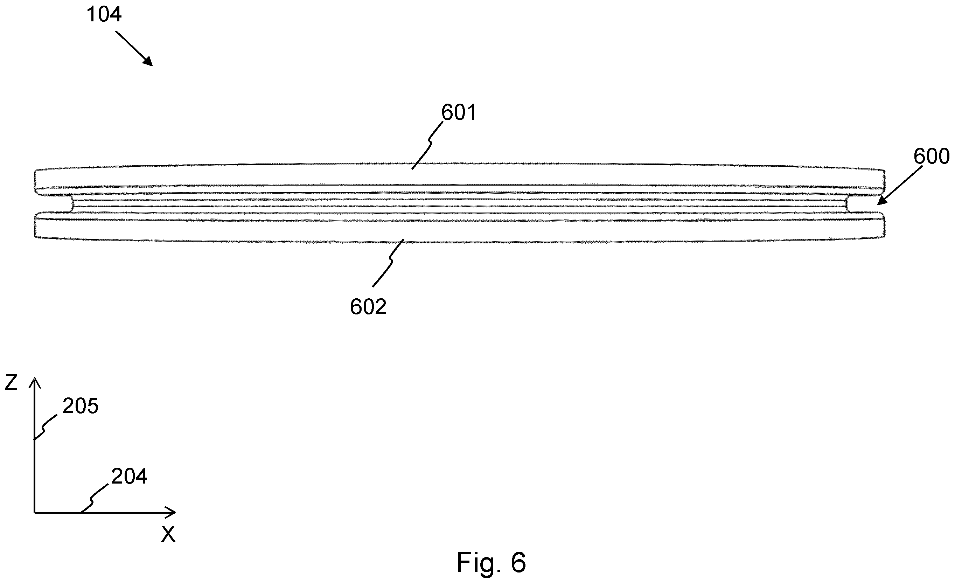

Fig. 5 and Fig. 6 show the ring-shaped attachment element 104 in more detail. The ring-shaped element 104 is fixedly attached to the robot 100, by means of the components 603, around the neck 200 of the robot 100. A component 603 forms a sleeve which can be placed over a corresponding sleeve on the robot, or through which a screw can be inserted. The ring-shaped element 104 further comprises two rings 601 and 602, between which an annular groove 600 is located. Fig. 6 shows that the groove 600 is horizontal: the lower plane of the ring 601 and the upper plane of the ring 602 are in the mounted state parallel to the XY-plane, so that a plate end can be slid into the groove 600 in horizontal direction.

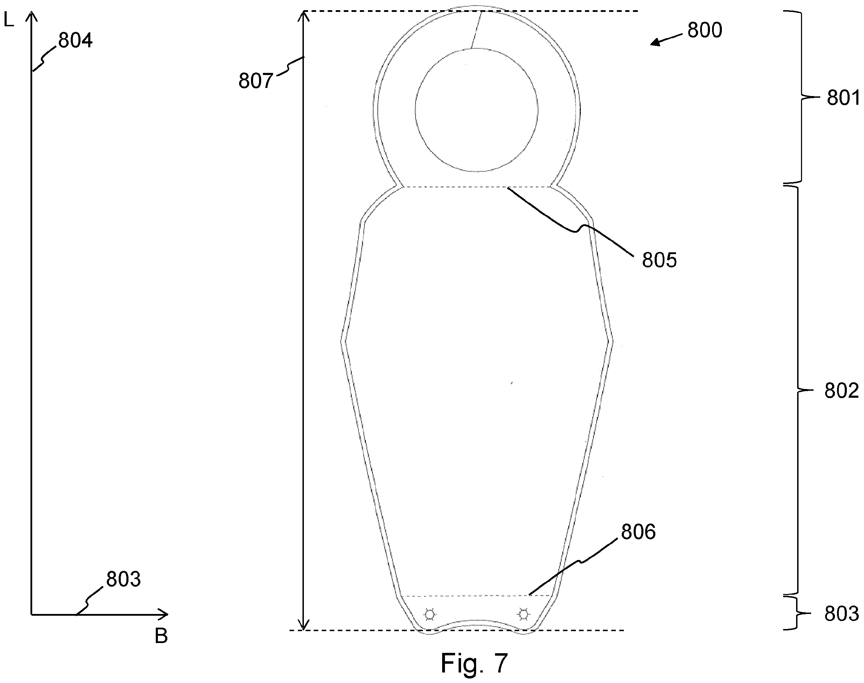

Fig. 7 shows a cover 800 according to an embodiment of the invention. In the shown embodiment the cover consists of a plate 800 from bendable material, more specifically a cardboard plate 800, which is cut to a specific shape. The outer circumference line on Fig. 7 indicates a bleed zone for cutting. Fig. 7 shows the cardboard plate 800 in flat state, i.e. located in a flat plane, wherein the plate 800 extends along a length direction 804 and a width direction 803. The thickness of the plate 800, not visible on the figure, is measured perpendicularly to this plane, and is substantially smaller than the length and width of the plate 800. The plate 800 is for example manufactured from cardboard of 0,5 mm thick and having a weight of 350 gram per square meter. Thus, the plate is manufactured from cheap material, and can easily be cut into the suitable shape.

The plate 800 consists of an upper section 801, a middle section 802 and a lower section 803. The plate 800 has two opposite ends along the length direction 804: the upper section 801 is situated at one end, and the lower section 803 is situated at an opposite end. Fig. 7 further shows two fold lines 805 and 806. These fold lines 805 and 806 give an indication of where the plate 800 will be folded before being attached to the robot 100. Optionally a representation of the fold lines 805, 806 is printed on the plate 801, but not necessarily. The fold line 805 runs parallel to the width direction 803 and forms the separation between the upper section 801 and the middle section 802. The fold line 806 runs parallel to the width direction 803 and forms the separation between the lower section 803 and the middle section 802.

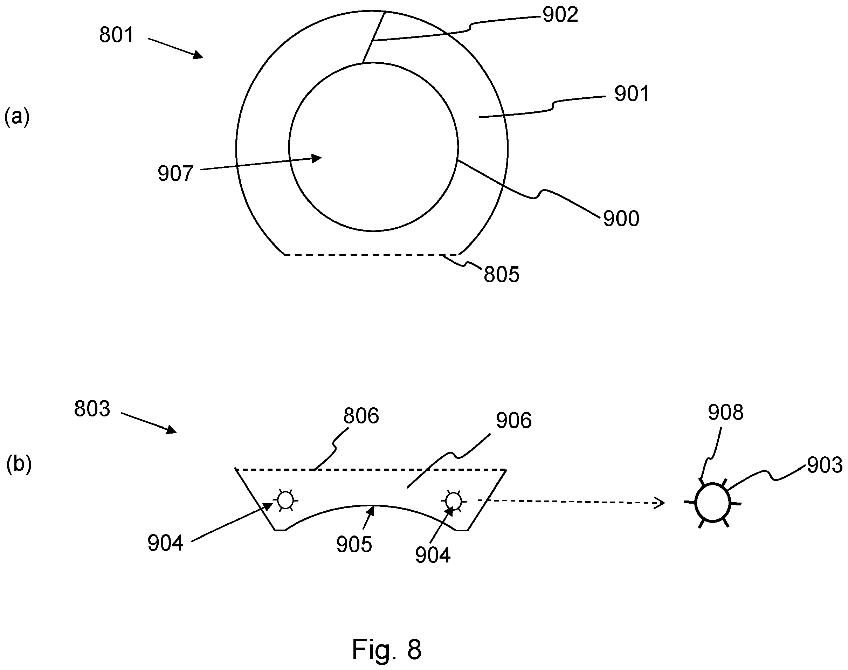

Fig. 8(a) schematically shows the upper section 801 of the plate 800. It consists of a cardboard ring 901 which has a central round opening 907. The central opening 907 is delimited by a round edge 900. The ring 901 is cut at its top, so that it can easily be placed around the neck 200 of the robot 100. The round edge 900 of the upper plate section 801 forms a first connector pair together with the groove 600 in the ring-shaped element 104 of the robot 100, wherein the round edge 900 is a projection which fits in the recess formed by the groove 600. Thus, a first connecting system is formed, to connect the plate 800 to the robot at a first height position 201 in a detachable manner. When forming the connection, the round edge 900 is slid into the groove 600 in horizontal direction, so that a part of the cardboard ring 901 contacts the delimiting planes of the groove 600. The cardboard ring 901 is herein fixed in both the width direction and the depth direction, resulting in a robust attachment. Thus, a first plate section, located at the upper end of the plate 800 is at a fixed position with respect to the robot 100.

Fig. 8(b) shows in a schematic manner the lower section 803 of the plate 800. It consists of a cardboard flap 906, with at the bottom a curved edge 905. Two holes 904 are disposed in the cardboard flap 906, each hole 904 delimited by an edge 903. Small cuts 908 are disposed over the circumference of the edge 903 in radial direction. The holes 904 of the lower plate section 803 form a second connector pair together with the vertical pins 105 of the robot 100, wherein the pins 105 form projections which fit through the recesses formed by the holes 904. Thus, a second connecting system is formed, to connect the plate 800 to the robot 100 at a second height position 202 in a detachable manner. When forming the connection, the vertical pins 105 are slid through the holes 904, so that an edge 903 contacts a pin 105. By making the circumference of the hole 904 slightly smaller than the circumference of a pin 105, and by providing radial cuts 908 over the circumference of the hole 9054, a good contact between the edge 903 and the pin 105 is achieved, so that the occurring friction prevents the flap 906 from detaching from the pins 105. Moreover, by providing to pins 105 at different width positions, an even more robust attachment is obtained. Thus, a second plate section, located at the lower end of the plate 800, is at a fixed position with respect to the robot.

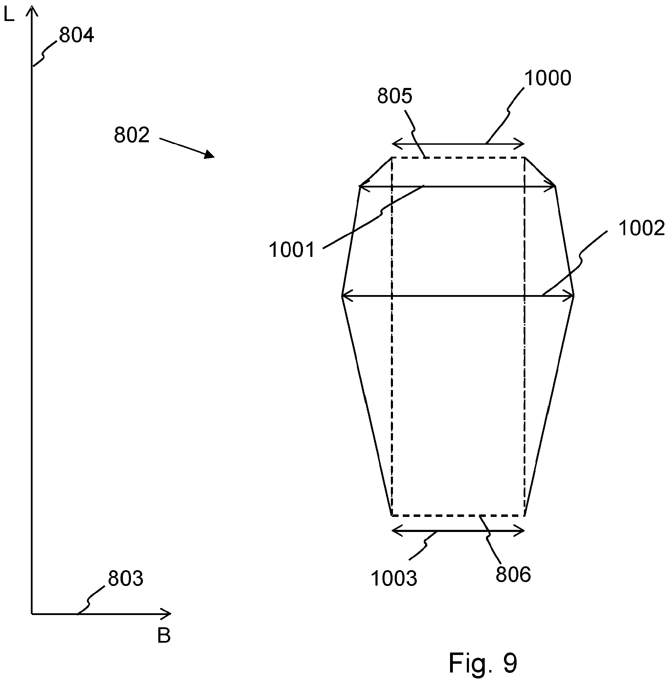

Fig. 9 shows in a schematic manner the middle section 802 of the plate 800. The width 1000 at the level of the fold line is in the shown embodiment the same as the width 1003 at the level of the fold line 806. The width first increases between both fold lines 805 and 806, and subsequently decreases: the width increases first from width 1003 to width 1002 along the length direction 804, subsequently it decreases to width 1001, and subsequently it decreases further to the width 1000. The maximum width of the middle section 802, and of the entire plate 800, is thus achieved at a length position located between the two fold lines 805 and 806, where the width 1002 is indicated on the figure. In attached state of the plate on the robot 100, the maximum plate width 1002 is located between the first height position 201 and the second height position 202. The length 807 of the plate 800 is 667.5 mm in the embodiment shown, and the distance between the two fold lines 805, 806, measured along length direction 804 is 441 mm. The maximum width 1102 is 285 mm.

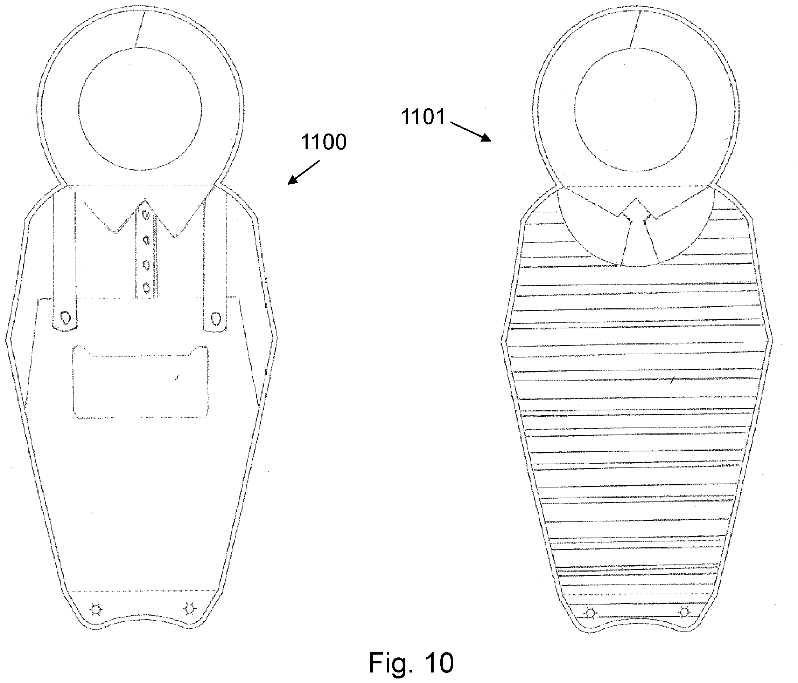

Fig. 10 illustrates that according to different themes a different cover with adapted print can be provided. The print is herein disposed on the front side of the plate 800. Fig. 10 shows two examples. The suspenders and upper side of the dungarees are depicted on the cover 1100, for example following a promotional action of coffee with which one wants to radiate coziness. A tie and shirt are represented on the cover 1101, for example to represent the robot that guides customers. Additionally, a certain text can be printed on the cover, for example the name of a brand, or a message such as 'At your service'. A cover having an adapted print can be chosen in function of other themes, brands, promotional actions or function of the robot.

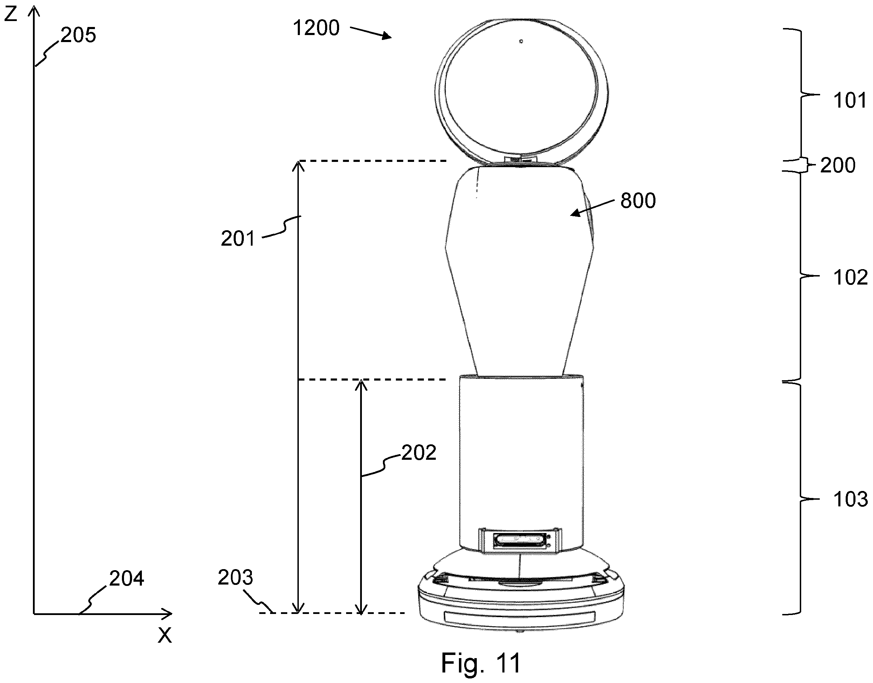

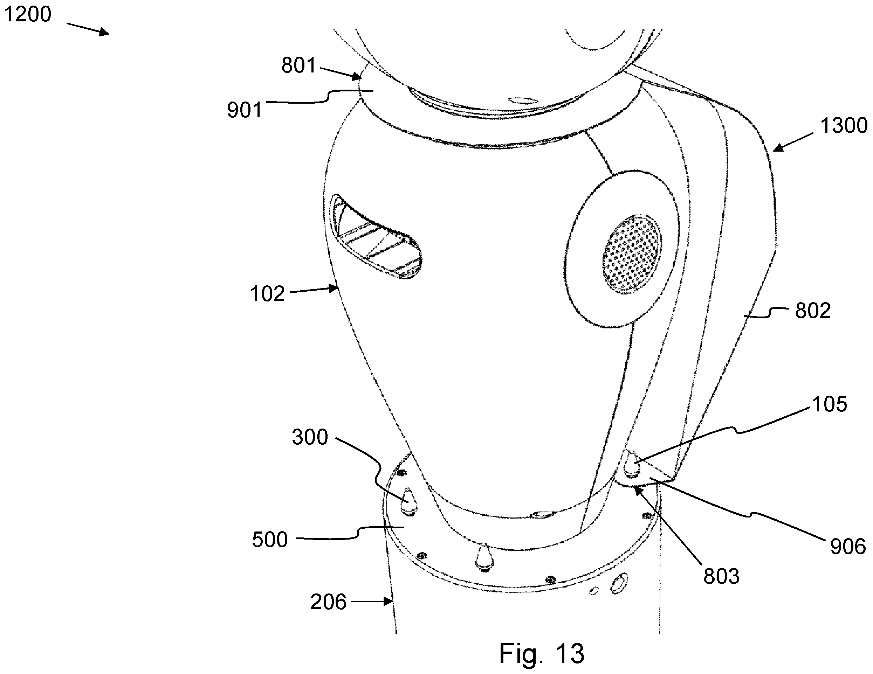

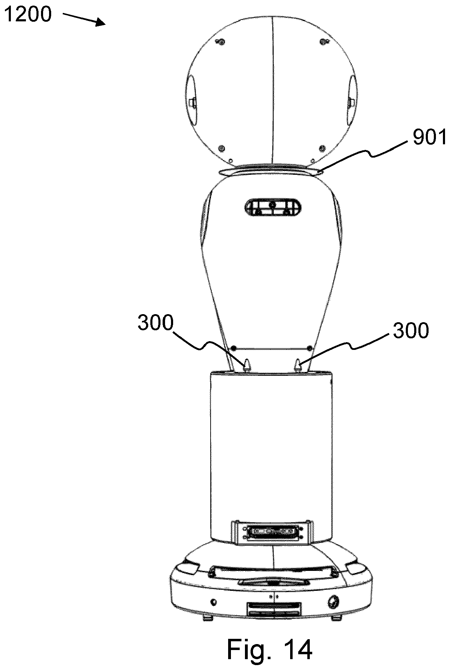

Fig. 11 to 14 show a decorated robot 1200: the robot 100 on which the cover 800 is detachably connected. Attaching the cover 800 occurs as follows:
- The plate is folded along two folding lines 805, 806, so that a mark is produced in the cardboard. The cardboard flap 906 and the cardboard ring 901 of the plate 800 are herein folded backwards.
- The ring 901 of the plate 800 is opened along the cut 902, and placed around the neck 200 of the robot 100. The round edge 900 of the plate slides herein into the groove 600 of the ring-shaped element 104 on the robot 100, so that the cardboard ring 901 remains held in place between the parts 601 and 602 of the ring-shaped element 104. The round plate-edge 900, which is part of the upper plate section 801, is in this way at a fixed position with respect to the robot 100. In other words, a first degree of freedom is removed at the level of the first height position 201. At the back, at the cut 902, both cardboard ring parts 901 of the plate can somewhat overlap, as is visible on Fig. 13 and Fig. 14, to make the attachment even more robust.
- The vertical pins 105 on the robot 100 are slid through the holes 904 of the plate 800. The edges 903 herein contact the pins 105, so that friction prevents the plate from detaching from the pins 105. The edges 903, which are part of the lower plate section 803, are in that way at fixed positions with respect to the robot 100. In other words, a second degree of freedom is removed at the level of the second height position 202. The curved edge 905 of the lower plate section 803 ensures in the embodiment shown a proper fit on the body of the robot 100.

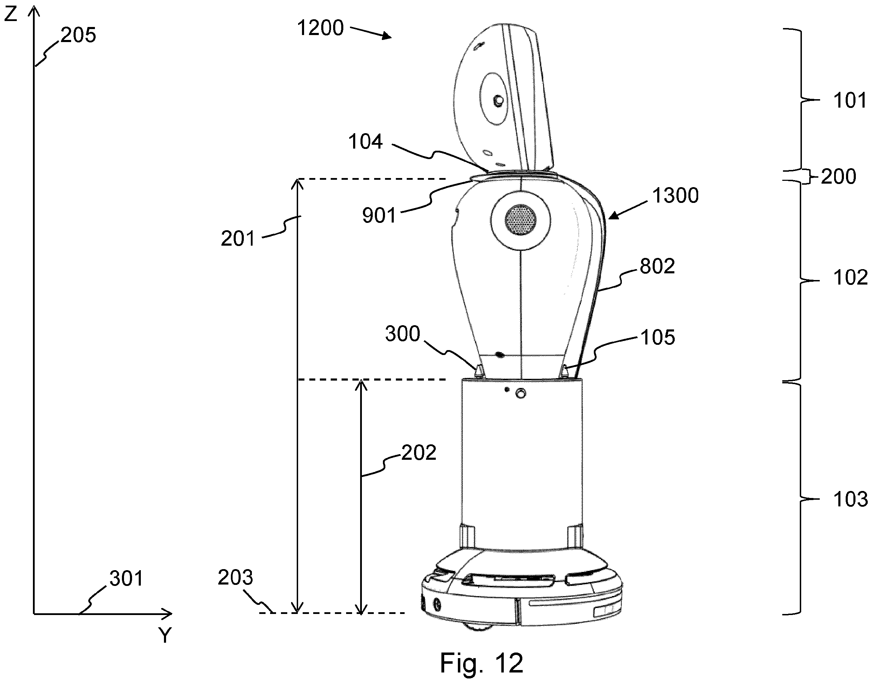

By attaching the plate 800 at the level of the first and second height position 201, 202, with the length direction 804 of the plate corresponding to the height direction 205, the cover 800 covers the entire height of the torso 102, as is visible in Fig. 11. The plate 800 adopts a bend shape 1300 between the first and second height position 201, 202, as is best visible in Fig. 12 and Fig. 13. The bend, which occurs automatically by tensioning the plate 800 between the two heigh positions 201, 202, is a deformation in the Y-direction or depth direction 301; there is no deformation along the X-direction or width direction 204. In other words, the bend occurs across the length direction 804 of the plate 800, and not across the width direction 803. Thus, the plate 800 is convex, with the concave side facing the body of the robot 100, and the convex side facing forward. The folds, made along fold lines 805, 806 run horizontally in attached state, parallel to the XY-plane and parallel to the width direction 204. After attaching the plate 800 to the robot 100, the folds may slightly open. Fig. 13 illustrates that for the embodiment shown in the attached state of the plate 800, the upper plate section 801 and lower plate section 803 remain flat, i.e. not bend, and the middle section 802, located between the two fold lines 805, 806, adopts the bend shape.

The figures show a cover 800 which was disposed at the front side of the robot 100. In an analogous manner a cover 800 can be disposed at the back side of the robot 100, by making use of the ring-shaped element 104, which extends around the neck 200, and the backmost pins 300, see for example Fig. 12 and Fig. 13. In this way, robot 100 may be provided with a cover at the front side only, a cover at the back side only or simultaneously a cover at the front side and the back side.

The figures illustrate that the bend shape of the plate 800 gives a round shape to the 'coat' being disposed on the torso 102. In this way, the decorated robot 1200 obtains a natural and playful appearance, without looking like a walking billboard. Note that in the shown embodiment the robot 100 itself already has a rounded torso 102, but in other embodiments the same effect of the coat can be achieved even if the torso has a flat front side. Also note that due to the specific shape of the middle section 802 of the plate 800, with increasing and subsequently decreasing width, the effect of a natural/playful appearance of the coat is even enhanced.

Additionally, the figures show that the attachment elements, intended for detachably connecting the coat 800 to the robot 100, are invisible or discrete. Indeed, the pins 105, in attached state of the coat 800, are hidden behind the middle section 802 of the plate 800. The ring-shaped element 104, which forms a collar for the robot 100, matches nicely with the design of the robot 100, and is not perceived as a technical attachment element as such. Thus, the used attachment systems result in an appealing, non-technical appearance for the decorated robot 1200.

Finally, the connecting systems used herein ensure a robust attachment on the one hand, which prevents release of the plate 800, and allows a quick and simple exchange of the cover 800 on the other hand. There is also no risk that pieces, which could be torn off from the plate 800 while removing it, become stuck in a hard to reach location. Thus, the robot 100 can be changed frequently, corresponding to a current theme or promotional action.

Although the present invention was illustrated by means of specific embodiments, it will be clear for the person skilled in the art that the invention is not limited to the details of the foregoing illustrative embodiments, and that the present invention may be executed with different modifications and adaptations without departing from the field of application of the invention. The present embodiments should therefore in all respects be considered as illustrative and not restrictive, wherein the field of application of the invention is described by attached claims and not by the foregoing description, and all modifications which fall inside the meaning and scope of the claims are therefore included. In other words, it is understood to include all modifications, variations or equivalents falling inside the are of application of the underlying basic principles and of which the essential attributes are claimed in this patent application. Moreover, the reader of this patent application will understand that the words "comprising" or "to comprise" do not exclude other elements or other steps, and that the word "a(n)" does not exclude plural. Possible references in the claims may not be understood as a limitation of the respective claims. The terms "first", "second", "third", "a", "b", "c" and the like, when used in the description or in the claims, are used to distinguish between similar elements or steps and do not necessarily describe a successive or chronological order. The terms "top", "bottom", "over", "under" and the like are used in the same way with respect to the description and do not refer necessarily to relative positions. It should be understood that these terms are mutually interchangeable under the right conditions and the embodiments of the invention are able to function according to the present invention in other orders or orientations than those described or illustrated in the above.

## Claims

1. A system for decorating a robot (100), comprising:
- a robot (100), comprising a torso (102) and a head (101) attached to the upper side of said torso (102), said robot (100) extending along a height direction (205);
- a cover, comprising a plate (800) from bendable material;
- a first (900, 600) and a second connector pair (904, 105) adapted to detachably connect said plate (800) to said robot (100) at a first (201) respectively second height position (202), so that, in connected state, a first (900) and second plate section (903), at opposite ends of said plate (800), are at fixed positions with respect to said robot (100), and at least a part of said plate (800) adopts a bent shape (1300) therebetween,
said first (900, 600) and second connector pair (904, 105) each comprising:
- one or multiple recesses (904) disposed in said material of said plate (800), and one or multiple projections (105) comprised in said robot (100), said one or multiple projections (105) being adapted to be slid through said one or multiple recesses (904),
or
- one or multiple edges (900) of said plate (800), and one or multiple recesses (600) comprised in said robot (100), said one or multiple edges (900) being adapted to be slid into said one or multiple recesses (600).

2. A system according to any of the preceding claims,
wherein said plate (800) is made from one piece from the same material which, in an unconnected state, extends in a flat plane.

3. A system according to any of the preceding claims,
wherein, in connected state, said plate (800) is elastically deformed over at least a part thereof, resulting in said bent shape.

4. A system according to any of the preceding claims,
wherein said plate (800), in connected state, adopts over at least a part thereof a bent shape, with a concave side facing said torso (102).

5. A system according to any of the preceding claims,
wherein, in connected state, at least a part of said torso (102) is covered by said plate (800) across the entire height of said torso (102).

6. A system according to any of the preceding claims,
wherein said one or multiple recesses (600) comprised in said robot (100) are one or multiple horizontal grooves (600), adapted to slidingly receive one or multiple edges (900) of said plate (800) along a direction perpendicular to said height direction (205).

7. A system according to any of the preceding claims,
wherein said one or more projections (105) comprised in said robot (100) are vertical pins (105), extending along a direction parallel to said height direction (205).

8. A system according to any of the preceding claims,
wherein said first height position (201) is located higher than said second height position (202), and
wherein said first connector pair (900, 600) comprises:
- one or multiple horizontal grooves (600) comprised in said robot (100), and
- one or multiple edges (900) of said plate (800), adapted to be slid into said one or multiple grooves (600);
and wherein said second connector pair (904, 105) comprises:
- one or multiple holes (904) disposed in said plate (800), and
- one or multiple vertical pins (105) comprised in said robot (100), adapted to be slid through said one or multiple holes (904).

9. A system according to any of the preceding claims,
wherein said robot (100) comprises a groove (600), disposed over the circumference of the neck (200), said neck (200) located at a height position between said head (101) and the upper side of said torso (102),
and wherein said plate (800) comprises a round edge (900), adapted to be slid into said groove (600).

10. A system according to any of the preceding claims,
wherein said plate (800) comprises one or multiple holes (904), and said robot (100) comprises one or multiple pins (105) extending along said height direction (205), said pins (105) being placed at the bottom side of said torso (102) and adapted to be slid through said holes (904).

11. A system according to any of the preceding claims,
wherein said plate (800), in connected state, is folded along one or multiple lines (805, 806), each of said lines (805, 806) being perpendicular to said height direction (205).

12. A system according to any of the preceding claims,
wherein said plate (800) is made from cardboard.

13. A system according to any of the previous claims,
wherein said plate (800) has a middle section (802), which along the length direction (804) of said plate (800) is located between said opposite ends (801, 803), and wherein said middle section (802) has a width (1000, 1001, 1002, 1003) which, along said length direction (804), first increases and subsequently decreases, said width being measured perpendicular to said length direction (804).

14. A system according to any of the preceding claims,
wherein at least one side of said plate (800) has been printed on.

15. A method for decorating a robot (100), comprising:
- providing a robot (100), comprising a torso (102) and a head (101) attached to the upper side of said torso (102), said robot (100) extending along a height direction (205);
- providing a cover, comprising a plate (800) from bendable material;
- detachably connecting said plate (800) to said robot (100) at a first (201) and second height position (202), wherein a first (900) and second plate section (903), at opposite ends of said plate (800), are at fixed positions with respect to said robot (100), and at least a part of said plate (800) adopts a bend shape (1300) therebetween,
wherein said detachably connecting occurs:
- by sliding one or multiple projections (105) comprised in said robot (100) through one or multiple recesses (904) in the material of said plate (800),
- or by sliding one or multiple edges (900) of said plate (800) into one or multiple recesses (600) comprised in said robot (100).
